# EUROPEAN PATENT SPECIFICATION

(11) **EP 4 114 138 B1**
(45) Date of publication and mention of the grant of the patent: **10.09.2025**
(21) Application number: 21780938.3
(22) Date of filing: 24.03.2021
(51) Int. Cl.: H04W 36/00, H04W 36/30, H04W 76/19, H04W 88/04

(54) **COMMUNICATION CONTROL METHOD**
KOMMUNIKATIONSSTEUERUNGSVERFAHREN
PROCÉDÉ DE COMMANDE DE COMMUNICATION

(30) Priority: 30.03.2020 JP 2020061492
(43) Date of publication of application: 04.01.2023
(60) Divisional application: 25193330.5
(73) Proprietor: Kyocera Corporation, Kyoto-shi Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2021/012402
(87) International publication number: WO 2021/200510

(56) References cited:
- WO-A1-2018/201487
- WO-A1-2022/036501
- US-A1- 2016 212 682
- US-A1- 2018 152 986
- ZTE CORPORATION ET AL: "Consideration on AS level sidelink management", vol. RAN WG2, no. Xi'an, China; 20190408 - 20190412, 6 April 2019 (2019-04-06), XP051700971, Retrieved from the Internet <URL:http://www.3gpp.org/ftp/Meetings%5F3GPP%5FSYNC/RAN2/Docs/R2%2D1903629%2Ezip> [retrieved on 20190406]
- "3rd Generation Partnership Project; Technical Specification Group Radio Access Network; NR; NR and NG-RAN Overall Description; Stage 2 (Release 16)", vol. RAN WG2, no. V16.0.0, 8 January 2020 (2020-01-08), pages 1 - 101, XP051860596, Retrieved from the Internet <URL:ftp://ftp.3gpp.org/Specs/archive/38_series/38.300/38300-g00.zip 38300-g00.docx> [retrieved on 20200108]
- ERICSSON (RAPPORTEUR): "Summary of email discussion [107#75][NR/V2X] RLF", vol. RAN WG2, no. Chongqing, China; 20191014 - 20191018, 3 October 2019 (2019-10-03), XP051804205, Retrieved from the Internet <URL:https://ftp.3gpp.org/tsg_ran/WG2_RL2/TSGR2_107bis/Docs/R2-1913328.zip R2-1913328- Summary of email discussion [107#75][NR-V2X] RLF.docx> [retrieved on 20191003]
- CATT: "RLM / RLF Procedure in NR V2X Sidelink", 3GPP DRAFT; R2-1908738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20190826 - 20190830, 16 August 2019 (2019-08-16), Mobile Competence Centre ; 650, route des Lucioles ; F-06921 Sophia-Antipolis Cedex ; France , XP051766560

## Description

### Technical Field

The present invention relates to a communication control method used in a mobile communication system.

### Background Art

A sidelink relay technique in which a user equipment is used as a relay node in a mobile communication system based on the 3rd Generation Partnership Project (3GPP) standard has been studied. The sidelink relay is a technique in which a relay node referred to as a relay user equipment (Relay UE) intervenes in communication between a base station and a remote user equipment (Remote UE) and performs relay for the communication.

ZTE Corporation et al., "Consideration on AS level sidelink management", 3GPP TSG RAN WG2 Meeting #105bis, R2-1903629, Xi'an, China, 8th - 12th April 2019, discusses the implication of sidelink RRM and RLM and analyzes the triggering conditions for AS sidelink management.

3rd Generation Partnership Project; Technical Specification Group Radio Access Network; NR; NR and NG-RAN Overall Description; Stage 2, (Release 16), 3GPP TS 38.300 V16.0.0 (2019-12), provides an overview and overall description of the NG-RAN and focuses on the radio interface protocol architecture of NR connected to 5GC.

### Citation List

### Non-Patent Literature

Non-Patent Literature 1: 3GPP Contribution "RP-193253", the Internet <URL: https://www.3gpp.org/ftp/tsg_ran/TSG_RAN/TSGR_86/Docs/RP-193253.zip>

### Main Request

### Summary of Invention

The present invention provides a communication control method according to claim 1, a chipset according to claim 3, a remote user equipment according to claim 4, a computer program according to claim 5, and a system according to claim 6. Further embodiments of the present invention are disclosed in the dependent claims.

The embodiments of figures 1, 2 and 11 fall under the scope of the claims. All the other embodiments do not fall under the scope of the claims. They are however retained as examples useful to better understand the invention.

### Brief Description of Drawings

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a base station (gNB) according to an embodiment.
FIG. 4 is a diagram illustrating a configuration of a protocol stack of a radio interface of a user plane.
FIG. 5 is a diagram illustrating a configuration of a protocol stack of a radio interface of a control plane.
FIG. 6 is a diagram illustrating a conceivable scenario of a mobile communication system according to an embodiment.
FIG. 7 is a diagram illustrating an example of a protocol stack in a conceivable scenario of a mobile communication system according to an embodiment.
FIG. 8 is a diagram illustrating an example of a protocol stack including a PC5 RRC layer according to an embodiment.
FIG. 9 is a diagram illustrating another example of the protocol stack including the PC5 RRC layer according to an embodiment.
FIG. 10 explains a notification operation from PC5 RRC to Uu RRC in remote UE according to an embodiment.
FIG. 11 is a diagram illustrating an operation of reestablishing RRC of a remote UE from a relay UE to a target gNB according to an embodiment.
FIG. 12 is a diagram illustrating an example of an RRC reestablishment request message according to an embodiment.
FIG. 13 is a diagram illustrating an example of an RRC reestablishment operation of relay UE according to an embodiment.
FIG. 14 is a diagram illustrating another example of the RRC reestablishment operation of the relay UE according to an embodiment.
FIG. 15 is a diagram illustrating an example of a reconnection destination selecting operation in RRC reestablishment processing of a remote UE according to an embodiment.

### Description of Embodiments

In the sidelink relay technique in Background Art, various failures (for example, a connection failure) in communication performed by a remote user equipment with a base stations via a relay user equipment are conceivable. Because the communication may be disconnected due to such failures, communication reliability may reduce.

Therefore, an object of the present disclosure is to improve reliability of communication using the sidelink relay technique.

A mobile communication system according to an embodiment will be described with reference to the drawings. In the description of the drawings, the same or similar parts are denoted by the same or similar reference signs.

### Configuration of Mobile Communication System

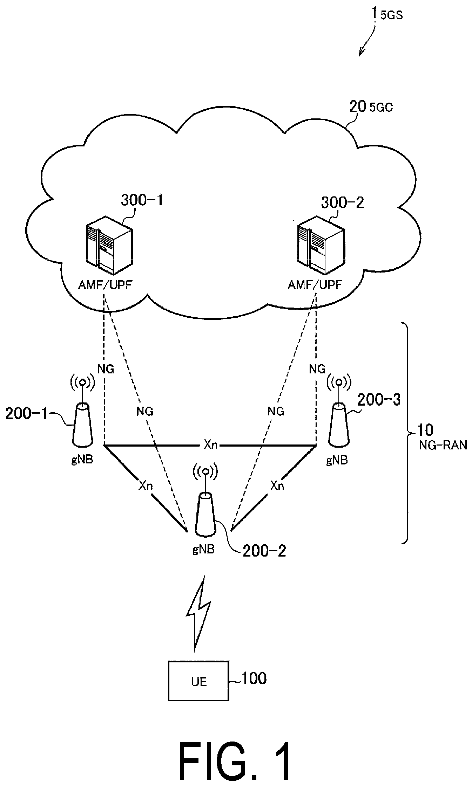

First, a configuration of a mobile communication system according to an embodiment will be described. FIG. 1 is a diagram illustrating a configuration of the mobile communication system according to an embodiment. This mobile communication system is based on the 5th Generation System (5GS) of the 3GPP standard. Although the following description will be given by exemplifying the 5GS, a Long Term Evolution (LTE) system may be at least partially applied to the mobile communication system.

As illustrated in FIG. 1, the 5GS 1 includes a user equipment (UE) 100, a 5G radio access network (next generation radio access network (NG-RAN)) 10, and a 5G core network (5GC) 20.

The UE 100 is a mobile wireless communication apparatus. The UE 100 may be any apparatus as long as the apparatus is used by a user. Examples of the UE 100 include a mobile phone terminal (including a smartphone), a tablet terminal, a laptop PC, a communication module (including a communication card or a chipset), a sensor or an apparatus provided in the sensor, a vehicle or an apparatus (Vehicle UE) provided in the vehicle, and/or a flying object or an apparatus (Aerial UE) provided in the flying object.

The NG-RAN 10 includes base stations (referred to as "gNBs" in the 5G system) 200. The gNBs 200 are connected to each other via an Xn interface, which is an inter-base station interface. The gNB 200 manages one or a plurality of cells. The gNB 200 performs wireless communication with the UE 100 that has established connection with a cell of the gNB 200. The gNB 200 has a radio resource management (RRM) function, a function of routing user data (hereinafter simply referred to as "data"), a measurement control function for mobility control and scheduling, and the like. The "cell" is used as a term denoting a minimum unit of a wireless communication area. The "cell" is also used as a term denoting a function or a resource for performing wireless communication with the UE 100. One cell belongs to one carrier frequency.

Note that a gNB can also be connected to an Evolved Packet Core (EPC), which is a core network of the LTE. A base station of the LTE can also be connected to the 5GC. The base station of the LTE and a gNB can also be connected via an inter-base station interface.

The 5GC 20 includes an Access and Mobility Management Function (AMF) and a User Plane Function (UPF) 300. The AMF performs various types of mobility control and the like for the UE 100. The AMF manages mobility of the UE 100 through communication with the UE 100 using Non-Access Stratum (NAS) signaling. The UPF performs transfer control of data. The AMF and the UPF are connected to the gNB 200 via an NG interface being an interface between the base station and the core network.

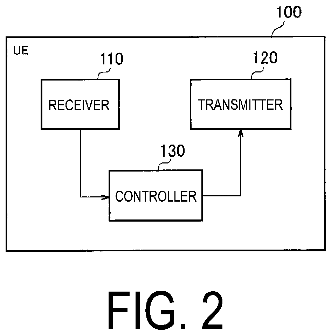

FIG. 2 is a diagram illustrating a configuration of the UE 100 (user equipment).

As illustrated in FIG. 2, the UE 100 includes a receiver 110, a transmitter 120, and a controller 130.

The receiver 110 performs various kinds of reception under control of the controller 130. The receiver 110 includes an antenna and a reception device. The reception device converts a radio signal received by the antenna into a baseband signal (reception signal) and outputs the baseband signal to the controller 130.

The transmitter 120 performs various kinds of transmission under control of the controller 130. The transmitter 120 includes an antenna and a transmission device. The transmission device converts a baseband signal (transmission signal) output by the controller 130 into a radio signal and transmits the radio signal from the antenna.

The controller 130 performs various kinds of control for the UE 100. The controller 130 includes at least one processor and at least one memory. The memory stores programs to be executed by the processor and information to be used for processing performed by the processor. The processor may include a baseband processor and a Central Processing Unit (CPU). The baseband processor performs modulation and demodulation, and coding and decoding of a baseband signal, and the like. The CPU executes the programs stored in the memory to perform various kinds of processing.

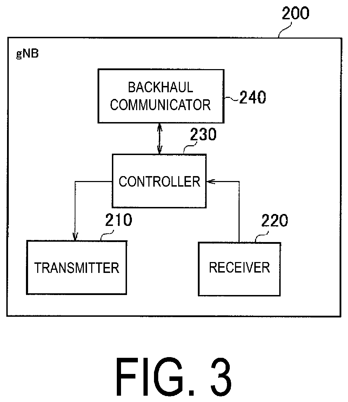

FIG. 3 is a diagram illustrating a configuration of the gNB 200 (base station).

As illustrated in FIG. 3, the gNB 200 includes a transmitter 210, a receiver 220, a controller 230, and a backhaul communicator 240.

The transmitter 210 performs various kinds of transmission under control of the controller 230. The transmitter 210 includes an antenna and a transmission device. The transmission device converts a baseband signal (transmission signal) output by the controller 230 into a radio signal and transmits the radio signal from the antenna.

The receiver 220 performs various kinds of reception under control of the controller 230. The receiver 220 includes an antenna and a reception device. The reception device converts a radio signal received by the antenna into a baseband signal (reception signal) and outputs the baseband signal to the controller 230.

The controller 230 performs various kinds of control for the gNB 200. The controller 230 includes at least one processor and at least one memory. The memory stores programs to be executed by the processor and information to be used for processing performed by the processor. The processor may include a baseband processor and a CPU. The baseband processor performs modulation and demodulation, and coding and decoding of a baseband signal, and the like. The CPU executes the programs stored in the memory to perform various kinds of processing.

The backhaul communicator 240 is connected to a neighboring base station via an inter-base station interface. The backhaul communicator 240 is connected to an AMF/UPF 300 via a base station-core network interface. Note that the gNB may be composed of (in other words, functionally split into) a Central Unit (CU) and a Distributed Unit (DU), and both the units may be connected by an F1 interface.

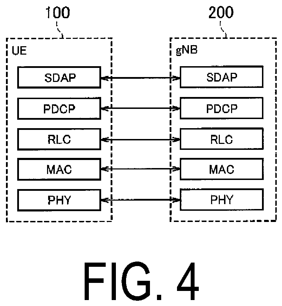

FIG. 4 is a diagram illustrating a configuration of a protocol stack of a radio interface in a user plane that handles data.

As illustrated in FIG. 4, the radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and antenna demapping, and resource mapping and resource demapping. Between the PHY layer of the UE 100 and the PHY layer of the gNB 200, data and control information are transmitted via a physical channel.

The MAC layer performs priority control of data, retransmission processing using a hybrid ARQ (HARQ), a random access procedure, and the like. Between the MAC layer of the UE 100 and the MAC layer of the gNB 200, data and control information are transmitted via a transport channel. The MAC layer of the gNB 200 includes a scheduler. The scheduler determines transport formats (transport block sizes, modulation and coding schemes (MCSs)) in the uplink and the downlink and determines resource blocks to be allocated to the UE 100.

The RLC layer transmits data to the RLC layer on the reception end by using functions of the MAC layer and the PHY layer. Between the RLC layer of the UE 100 and the RLC layer of the gNB 200, data and control information are transmitted via a logical channel.

The PDCP layer performs header compression and header decompression, and encryption and decryption.

The SDAP layer maps an IP flow being a unit in which the core network performs QoS control onto a radio bearer being a unit in which the access stratum (AS) performs QoS control. Note that, when the RAN is connected to the EPC, the SDAP may not be provided.

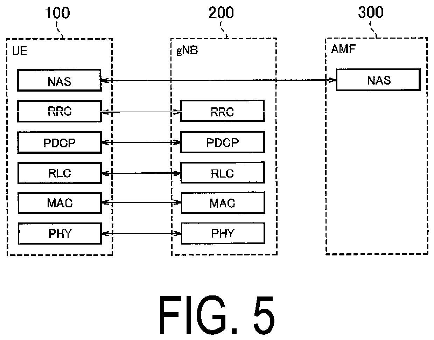

FIG. 5 is a diagram illustrating a configuration of a protocol stack of a radio interface of a control plane that handles signaling (control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

Between the RRC layer of the UE 100 and the RRC layer of the gNB 200, RRC signaling for various configurations is transmitted. The RRC layer controls a logical channel, a transport channel, and a physical channel according to establishment, reestablishment, and release of a radio bearer. When there is connection (RRC connection) between the RRC of the UE 100 and the RRC of the gNB 200, the UE 100 is in an RRC connected mode. When there is no connection (RRC connection) between the RRC of the UE 100 and the RRC of the gNB 200, the UE 100 is in an RRC idle mode.

The NAS layer located in a layer higher than the RRC layer performs session management, mobility management, and the like. Between the NAS layer of the UE 100 and the NAS layer of the AMF 300, NAS signaling is transmitted.

Note that the UE 100 includes an application layer and the like other than the protocol of the radio interface.

### Conceivable Scenario

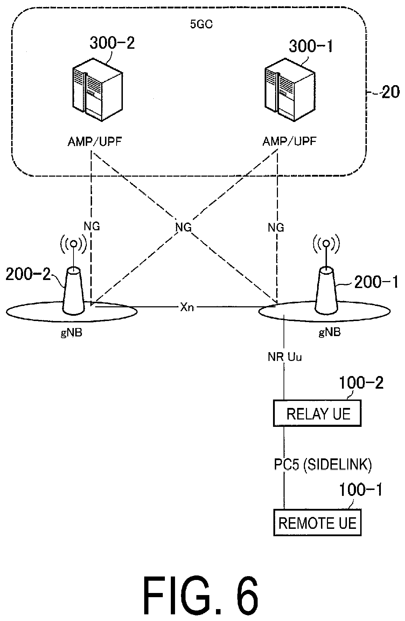

Next, a conceivable scenario in the mobile communication system 1 according to an embodiment will be described. FIG. 6 is a diagram illustrating the conceivable scenario.

As illustrated in FIG. 6, a scenario in which relay UE 100-2 intervenes in communication between a gNB 200-1 and a remote UE 100-1 and sidelink relay relaying the communication is used will be conceived.

The remote UE 100-1 performs wireless communication (sidelink communication) with the relay UE 100-2 on a PC5 interface (sidelink), which is an inter-UE interface. The relay UE 100-2 performs wireless communication (Uu communication) with the gNB 200-1 on an NR Uu radio interface. As a result, the remote UE 100-1 indirectly communicates with the gNB 200-1 via the relay UE 100-2. The Uu communication includes uplink communication and downlink communication.

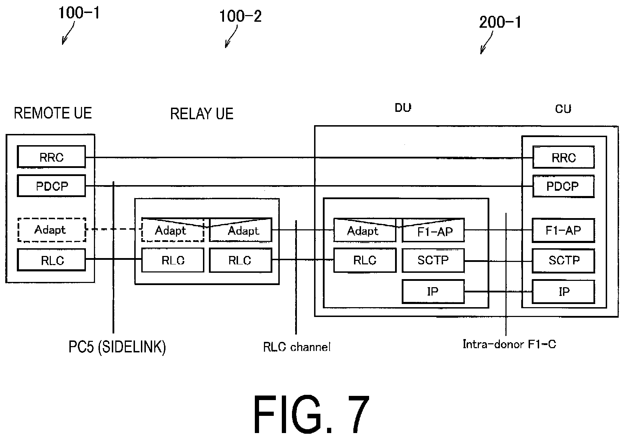

FIG. 7 is a diagram illustrating an example of a protocol stack in a conceivable scenario. In FIG. 7, illustration of the MAC layer and the PHY layer that are lower layers with respect to the RLC layer is omitted.

As illustrated in FIG. 7, the gNB 200-1 may be split into the CU and the DU. An F1-C interface (Intra-donor F1-C) is established between the CU and the DU.

The PDCP layer of the CU of the gNB 200-1 and the PDCP layer of the remote UE 100-1 communicate with each other via the relay UE 100-2. The RRC layer of the CU and the RRC layer of the remote UE 100-1 also communicate with each other via the relay UE 100-2. In the DU, the relay UE 100-2, and the remote UE 100-1, an adaptation (Adapt) layer may be provided as an upper layer of the RLC layer.

Note that although illustration is omitted in FIG. 7, the RRC layer of the CU and the RRC layer of the relay UE 100-2 communicate with each other. The PDCP layer of the CU and the PDCP layer of the relay UE 100-2 communicate with each other.

Also, each of the remote UE 100-1 and the relay UE 100-2 may include an RRC layer for the PC5. Such an RRC layer is referred to as a "PC5 RRC". The PC5 RRC layer of the remote UE 100-1 and the PC5 RRC layer of the relay UE 100-2 communicate with each other.

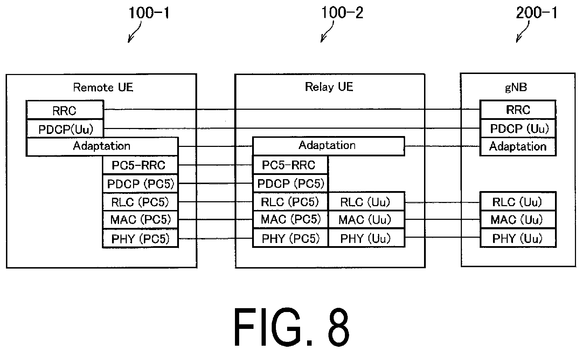

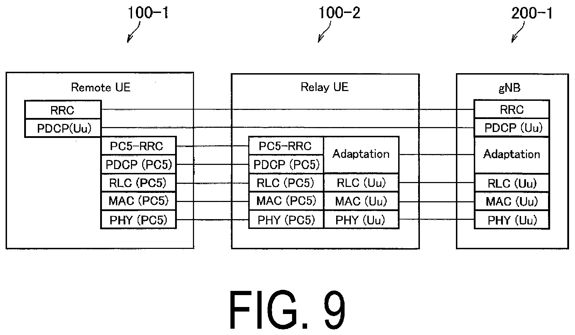

FIG. 8 is a diagram illustrating an example of a protocol stack including a PC5 RRC layer. FIG. 9 is a diagram illustrating another example of the protocol stack including the PC5 RRC layer. Although FIGS. 8 and 9 illustrate examples in which the gNB 200-1 is not split into a DU and a CU, the gNB 200-1 may be split into a DU and a CU.

As illustrated in FIG. 8, the gNB 200-1 includes an RRC layer, a PDCP layer (Uu), an RLC layer (Uu), a MAC layer (Uu), and a PHY layer (Uu) used for communication on a Uu interface (Uu communication). Also, the gNB 200-1 includes an adaptation layer between the PDCP layer (Uu) and the RLC layer (Uu).

The relay UE 100-2 includes an RRC layer (not illustrated), an RLC layer (Uu), a MAC layer (Uu), and a PHY layer (Uu) used for communication on the Uu interface (Uu communication). Additionally, the relay UE 100-2 includes a PC5 RRC layer, a PDCP layer (PC5), an RLC layer (PC5), a MAC layer (PC5), and a PHY layer (PC5) used for communication on the PC5 interface (PC5 communication). Moreover, the relay UE 100-2 includes an adaptation layer as a layer that is higher than the PC5 RRC layer.

The remote UE 100-1 includes an RRC layer and a PDCP layer (Uu) used for communication on the Uu interface (Uu communication). Also, the remote UE 100-1 includes a PC5 RRC layer, a PDCP layer (PC5), an RLC layer (PC5), a MAC layer (PC5), and a PHY layer (PC5) used for communication on the PC5 interface (PC5 communication). Furthermore, the remote UE 100-1 includes an adaptation layer between the PDCP layer (Uu) and the PC5 RRC layer.

As illustrated in FIG. 9, the remote UE 100-1 may not include the adaptation layer. In the example illustrated in FIG. 9, the adaptation layer of the relay UE 100-2 is positioned as an upper layer with respect to the RLC layer (Uu).

### Operations of Mobile Communication System

Operations of the mobile communication system 1 according to an embodiment will be described.

### (1) Notification Operation from PC5 RRC to Uu RRC in Remote UE

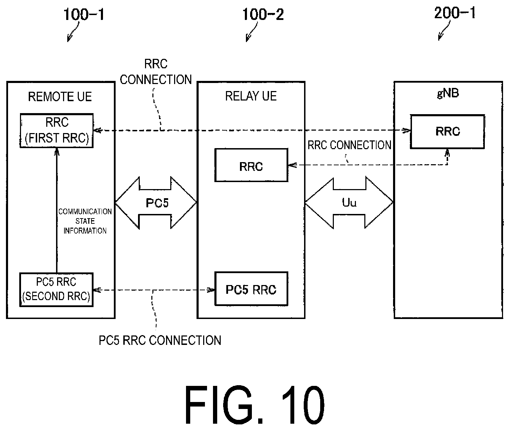

A notification operation from the PC5 RRC to the Uu RRC in the remote UE will be described. FIG. 10 is a diagram illustrating the notification operation.

As illustrated in FIG. 10, the relay UE 100-2 relays communication between the remote UE 100-1 and the gNB 200-1. The remote UE 100-1 includes an RRC layer (first RRC layer) and a PC5 RRC layer (second RRC layer).

The RRC layer of the remote UE 100-1 includes RRC connection with the RRC layer of the gNB 200-1. The RRC layer of the remote UE 100-1 transmits and receives, to and from the RRC layer of the gNB 200-1 via the relay UE 100-2, an RRC message performing control of communication with the gNB 200-1.

The PC5 RRC layer of the remote UE 100-1 includes PC5 RRC connection with the PC5 RRC layer of the relay UE 100-2. The PC5 RRC layer of the remote UE 100-1 transmits and receives, to and from the PC5 RRC layer of the relay UE 100-2, an RRC message (PC5 RRC message) performing control of communication with the relay UE 100-2. The PC5 RRC layer of the remote UE 100-1 includes a function of managing and monitoring a first radio link (sidelink) between the remote UE 100-1 and the relay UE 100-2.

Note that the RRC layer and the PC5 RRC layer of the remote UE 100-1 may be separate RRC entities or may be separate functions in one RRC entity.

Also, the relay UE 100-2 includes an RRC layer of Uu and is in a state in which RRC connection with the RRC layer of the gNB 200-1 has been established (that is, an RRC connected mode).

In this notification operation, the PC5 RRC layer of the remote UE 100-1 notifies the RRC layer of the remote UE 100-1 of communication state information regarding a failure or disconnection of a radio link between the remote UE 100-1 and the relay UE 100-2. In this manner, the RRC layer of the remote UE 100-1 can recognize and appropriately address the failure or the disconnection of the radio link between the remote UE 100-1 and the relay UE 100-2.

For example, the RRC layer of the remote UE 100-1 performs processing (RRC reestablishment processing) of reestablishing RRC connection between the RRC layer of the remote UE 100-1 and the RRC layer of the gNB 200-1 on the basis of the communication state information notified. The RRC layer of the remote UE 100-1 may determine that a radio link failure (RLF) of the sidelink has been detected on the basis of the communication state information notified and perform the RRC reestablishment processing in response to the determination.

Here, the communication state information notified by the PC5 RRC layer of the remote UE 100-1 may include information regarding degradation of a sidelink communication state. For example, the communication state information includes at least one selected from the group consisting of information indicating occurrence of the RLF of the sidelink, information indicating that the reestablishment of the PC5 RRC connection has failed, and information indicating that a measurement result for the sidelink is below a threshold value.

In a case in which the reestablishment of the PC5 RRC connection has failed a predetermined number of times after detection of occurrence of the RLF of the sidelink, the PC5 RRC layer of the remote UE 100-1 may notify the RRC layer of the remote UE 100-1 of the information indicating that the reestablishment of the PC5 RRC connection has failed.

The measurement result for the sidelink is a measurement result for a sidelink reference signal transmitted by the relay UE 100-2, for example (a measurement result of received power, for example). The threshold value compared with the measurement result may be configured by any of the RRC layer of the remote UE 100-1, the PC5 RRC layer of the relay UE 100-2, and the RRC layer of the gNB 200-1. The measurement result for the sidelink may be a result of measuring a throughput in the sidelink, a result of measuring a communication delay time, or the like.

The communication state information may include information indicating that the PC5 RRC layer has received, from an upper layer, a release request requesting release of connection established by the PC5 RRC layer (specifically, PC5 RRC connection and/or PC5-S connection). The upper layer is a layer that is higher than the RRC layer and is, for example, the NAS layer.

The communication state information may include information regarding degradation of a communication state of the radio link (Uu link) between the relay UE 100-2 and the gNB 200-1. The communication state information includes information indicating that the PC5 RRC layer of the remote UE 100-1 has received, from the relay UE 100-2, a notification (Uu RLF Notification) indicating occurrence of a failure of the radio link between the relay UE 100-2 and the gNB 200-1 or a notification (buffer overflow notification) indicating that the amount of data in an uplink buffer of the relay UE 100-2 has exceeded a threshold value.

Here, description will be given in regard to the Uu RLF Notification. First, in a case in which the RLF of Uu has been detected or in a case in which reestablishment has failed, the RRC layer of the relay UE 100-2 notifies the PC5 RRC layer of the relay UE 100-2 of the fact. Second, when the PC5 RRC layer of the relay UE 100-2 receives such a notification, the PC5 RRC layer of the relay UE 100-2 transmits the Uu RLF Notification to the PC5 RRC layer of the remote UE 100-1. Third, the PC5 RRC layer of the remote UE 100-1 notifies the RRC layer of the remote UE 100-1 of information indicating that the Uu RLF Notification has been received as communication state information in response to reception of the Uu RLF Notification.

Description will be given in regard to the buffer overflow notification. First, when the relay UE 100-2 receives data transmitted on the sidelink from the remote UE 100-1, the relay UE 100-2 temporarily stores the received data in the uplink buffer. Second, the relay UE 100-2 monitors the amount of data in the uplink buffer and determines whether the amount of data has exceeded a threshold value. The threshold value may be set by the RRC layer of the gNB 200-1. Third, if it is determined that the amount of data in the uplink buffer has exceeded the threshold value, the PC5 RRC layer of the relay UE 100-2 transmits the buffer overflow notification to the PC5 RRC layer of the remote UE 100-1. Fourth, the PC5 RRC layer of the remote UE 100-1 notifies the RRC layer of the remote UE 100-1 of information indicating that the buffer overflow notification has been received as communication state information in response to the reception of the buffer overflow notification. Note that the Uu RLF Notification and/or the buffer overflow notification may be notified by control data of the adaptation layer in a case in which an adaptation layer (BAP or the like) link has been established between the relay UE 100-2 and the remote UE 100-1.

Note that a wireless LAN or Bluetooth (trade name) may be used instead of the sidelink of the 3GPP standard as the wireless communication between the remote UE 100-1 and the relay UE 100-2. In this case, the adaptation layer of the remote UE 100-1 may notify the RRC layer of the remote UE 100-1 of the communication state information.

The PC5 RRC layer or the RRC layer of the relay UE 100-2 may discard the context information of the remote UE 100-1 in the case in which the PC5 RRC connection with the remote UE 100-1 has been released. Also, in such a case, the RRC layer of the relay UE 100-2 may notify the RRC layer of the gNB 200-1 of the fact that the remote UE 100-1 is no longer a relay destination. The gNB 200-1 may reconfigure a Uu bearer on the basis of the notification.

### (2) RRC Reestablishment Operation of Remote UE from Relay UE to gNB

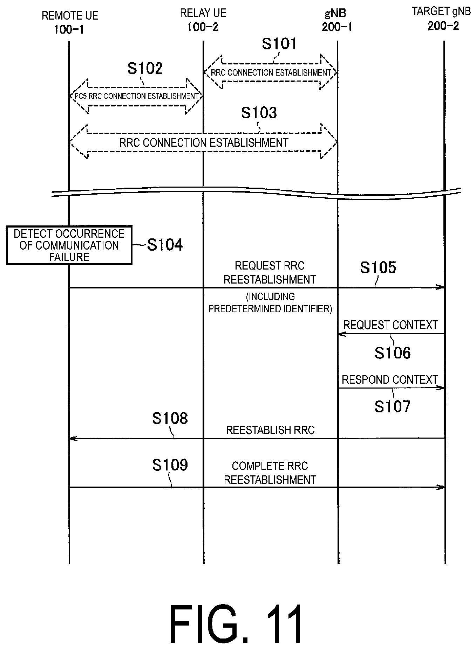

Next, operations of RRC reestablishment of the remote UE 100-1 from the relay UE 100-2 to the target gNB will be described. FIG. 11 is a diagram illustrating the operations.

As illustrated in FIG. 11, the relay UE 100-2 and the gNB 200-1 are in a state in which RRC connection has been established (Step S101), the remote UE 100-1 and the relay UE 100-2 are in a state in which PC5 RRC connection has been established (Step S102), and the remote UE 100-1 and the gNB 200-1 are in a state in which RRC connection has been established via the relay UE 100-2 (Step S103).

Each of the remote UE 100-1 and the relay UE 100-2 is allocated the corresponding Cell-Radio Network Temporary Identifier (C-RNTI) by the gNB 200-1. In this case, the gNB 200-1 may perform communication by associating the C-RNTI of the remote UE 100-1 with the C-RNTI of the relay UE 100-2 and performing conversion (interpretation) therebetween.

The remote UE 100-1 may acquire a cell identifier (physical cell identifier) of the gNB 200-1 via the relay UE 100-2. The remote UE 100-1 acquires the cell identifier at the time of establishment of the PC5 RRC connection, at the time of a handover, or at the time of the RRC reestablishment. The cell identifier may be notified in a PC5 RRC message (for example, an RRC Reconfiguration Sidelink message or a Master Information Block Sidelink) from the relay UE 100-2 to the remote UE 100-1. The cell identifier may be notified in an RRC message (for example, an RRC Reconfiguration message) from the gNB 200-1 to the remote UE 100-1 via the relay UE 100-2.

In Step S104, the remote UE 100-1 starts RRC reestablishment processing from the relay UE 100-2 to a target gNB 200-2 in response to detection of occurrence of a communication failure. Here, Step S104 may be a step corresponding to "(1) Notification Operation from PC5 RRC to Uu RRC in Remote UE" described above.

In Step S105, the remote UE 100-1 transmits an RRC reestablishment request message to the target gNB 200-2 in the RRC reestablishment processing. Note that the RRC reestablishment request message is transmitted from the remote UE 100-1 to the target gNB 200-2 without intervention of the relay UE 100-2.

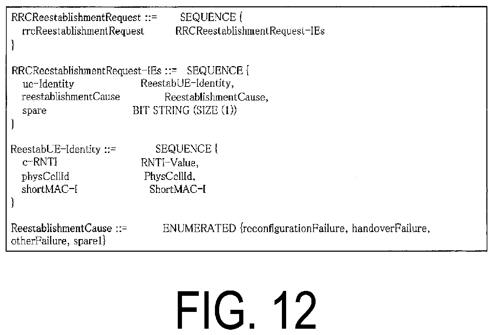

The RRC reestablishment request message includes a predetermined identifier to identify context information of the remote UE 100-1 stored in the gNB 200-1. FIG. 12 is a diagram illustrating an example of the RRC reestablishment request (RRCReestablishmentRequest) message.

As illustrated in FIG. 12, the RRC reestablishment request message includes ue-Identity (ReestabUE-Identity) corresponding to the predetermined identifier. The ue-Identity (ReestabUE-Identity) includes the C-RNTI (c-RNTI) allocated by the gNB 200-1, the cell identifier (physCellId) acquired via the relay UE 100-2, and shortMAC-I. The shortMAC-I is calculated by the PDCP layer of the remote UE 100-1.

Returning to FIG. 11, in Step S106, the target gNB 200-2 requests, by using the predetermined identifier included in the RRC reestablishment request message, the gNB 200-1 to derive the context information of the remote UE 100-1. Specifically, the target gNB 200-2 transmits a context request message including the predetermined identifier to the gNB 200-1.

The gNB 200-1 manages the context information of the remote UE 100-1 in association with the predetermined identifier. In Step S107, in response to the reception of the context request message from the target gNB 200-2, the gNB 200-1 derives the context information corresponding to the predetermined identifier included in the context request message and transmits a context response message including the context information to the target gNB 200-2.

In Step S108, the target gNB 200-2 transmits an RRC reestablishment message to the remote UE 100-1 in response to reception of the context response message from the gNB 200-1. Note that the RRC reestablishment message is transmitted from the gNB 200-1 to the remote UE 100-1 without intervention of the relay UE 100-2.

In Step S109, the remote UE 100-1 transmits an RRC reestablishment completion message to the target gNB 200-2 in response to reception of the RRC reestablishment message from the target gNB 200-2. Note that the RRC reestablishment completion message is transmitted from the remote UE 100-1 to the target gNB 200-2 without intervention of the relay UE 100-2. In this manner, the RRC reestablishment processing is completed. After the completion of the RRC reestablishment processing, the target gNB 200-2 or the gNB 200-1 may notify the relay UE 100-2 of the fact that the RRC reconnection processing of the remote UE 100-1 has been completed (that is, transition to Uu connection has been made).

In the operations, the example has been described in which the ue-Identity (ReestabUE-Identity) corresponding to the predetermined identifier includes the C-RNTI (c-RNTI) allocated by the gNB 200-1, the cell identifier (physCellId) acquired via the relay UE 100-2, and the shortMAC-I.

However, the ue-Identity (ReestabUE-Identity) corresponding to the predetermined identifier may include Destination ID (Destination Layer-2 ID) allocated to the remote UE 100-1 instead of the C-RNTI. The Destination ID corresponds to a transmission destination identifier for identifying the transmission destination in the sidelink communication. The Destination ID may be an identifier allocated by an entity (ProSe function) of the core network.

In such a case, the remote UE 100-1 notifies the gNB 200-1 of the Destination ID of the remote UE 100-1 in advance prior to a start of the RRC reestablishment processing. For example, the remote UE 100-1 notifies the gNB 200-1 of the Destination ID when the RRC connection via the relay UE 100-2 is established (Step S103).

### (3) RRC Reestablishment Operation of Relay UE

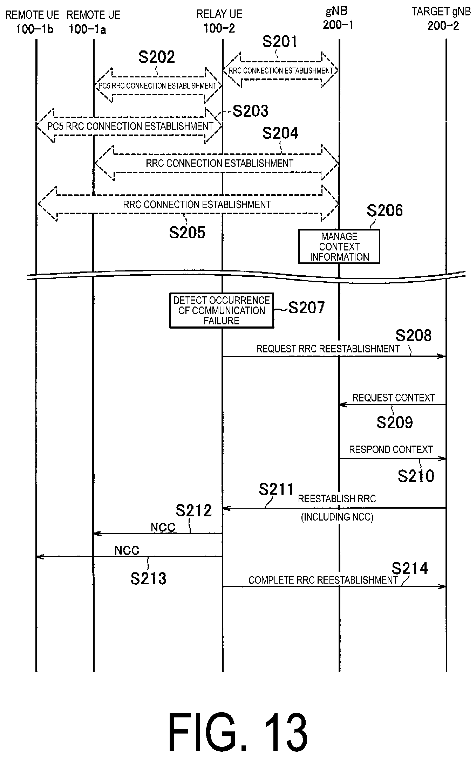

Next, an RRC reestablishment operation of the relay UE 100-2 will be described. FIG. 13 is a diagram illustrating an example of the RRC reestablishment operation of the relay UE 100-2. Although FIG. 13 illustrates the example in which a plurality of remote UEs 100-1 (a remote UE 100-1a and a remote UE 100-1b) are connected to the relay UE 100-2, the number of remote UEs 100-1 connected to the relay UE 100-2 may be one.

As illustrated in FIG. 13, the relay UE 100-2 and the gNB 200-1 are in a state in which RRC connection has been established (Step S201), the remote UE 100-1a and the relay UE 100-2 are in a state in which PC5 RRC connection has been established (Step S202), and the remote UE 100-1b and the relay UE 100-2 are in a state in which PC5 RRC connection has been established (Step S203). Also, as illustrated in FIG. 13, the remote UE 100-1a and the gNB 200-1 are in a state in which RRC connection has been established via the relay UE 100-2 (Step S204), and the remote UE 100-1b and the gNB 200-1 are in a state in which RRC connection has been established via the relay UE 100-2 (Step S205).

In Step S206, the gNB 200-1 manages an identifier of the relay UE 100-2, context information of the relay UE 100-2, and context information of the remote UE 100-1 in association with each other. The identifier of the relay UE 100-2 includes at least one selected from the group consisting of the C-RNTI, the Destination ID, and the shortMAC-I.

In Step S207, the relay UE 100-2 starts RRC reestablishment processing from the gNB 200-1 to the target gNB 200-2 in response to detection of occurrence of a communication failure (an RLF of Uu, for example).

In Step S208, the relay UE 100-2 transmits an RRC reestablishment request message including the identifier of the relay UE 100-2 to the target gNB 200-2. The RRC reestablishment request message may include information indicating that the remote UE 100-1 is present under the relay UE 100-2 (that the UE 100-2 is a relay UE). The RRC reestablishment request message may include information indicating that the plurality of remote UEs 100-1 are present under the relay UE 100-2 and/or the number of remote UEs 100-1 under the relay UE 100-2.

In Step S209, the target gNB 200-2 requests, by using the identifier of the relay UE 100-2 included in the RRC reestablishment request message, the gNB 200-1 to derive the context information of each of the remote UE 100-1 and the relay UE 100-2. Specifically, the target gNB 200-2 transmits a context request message including the identifier of the relay UE 100-2 to the gNB 200-1.

In Step S210, in response to reception of the context request message from the target gNB 200-2, the gNB 200-1 derives the context information (the context information of the relay UE 100-2 and the context information of the remote UE 100-1) corresponding to the identifier of the relay UE 100-2 included in the context request message and transmits a context response message including these pieces of context information to the target gNB 200-2.

In Step S211, the target gNB 200-2 transmits an RRC reestablishment message to the relay UE 100-2 in response to reception of the context response message from the gNB 200-1. The RRC reestablishment message includes predetermined information for the remote UE 100-1. The predetermined information is, for example, NextHopChainingCount (NCC) of each remote UE 100-1. The NCC is information used for decoding or the like of encrypted data. Moreover, the RRC reestablishment message may include an NCC for the relay UE 100-2.

In Step S212, the relay UE 100-2 transfers the NCC for the remote UE 100-1a included in the RRC reestablishment message to the remote UE 100-1a. In Step S213, the relay UE 100-2 transfers the NCC for the remote UE 100-1b included in the RRC reestablishment message to the remote UE 100-1b. Such a transferring operation may be performed by a PC5 RRC message. The remote UE 100-1 may determine that RRC reestablishment has been performed (completed) in the Uu link of the relay UE 100-2 on the basis of the transferring operation of the relay UE 100-2 in Step S212. Note that Step S212 is not limited to the transferring operation and may be a notification indicating that the RRC reestablishment processing has been performed (completed).

In Step S214, the relay UE 100-2 transmits an RRC reestablishment completion message to the target gNB 200-2. In this manner, the RRC reestablishment processing of each UE 100 is collectively completed.

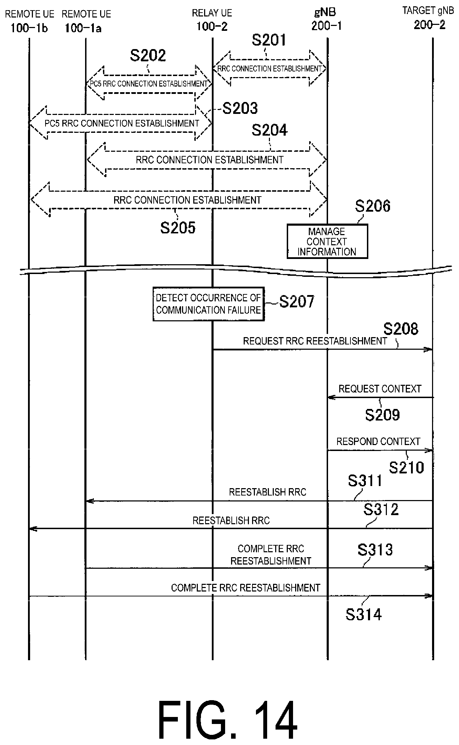

FIG. 14 is a diagram illustrating another example of the RRC reestablishment operation of the relay UE 100-2.

As illustrated in FIG. 14, operations in Steps S201 to S210 are the same as the operations illustrated in FIG. 13.

In Step S311, the target gNB 200-2 transmits an RRC reestablishment message including the NCC for the remote UE 100-1a to the remote UE 100-1a via the relay UE 100-2. In Step S312, the target gNB 200-2 transmits an RRC reestablishment message including the NCC for the remote UE 100-1b to the remote UE 100-1B via the relay UE 100-2.

In Step S313, the remote UE 100-1a transmits an RRC reestablishment completion message to the target gNB 200-2. In Step S314, the remote UE 100-1b transmits an RRC reestablishment completion message to the target gNB 200-2. Note that one remote UE 100-1 may transmit the RRC reestablishment completion message to the target gNB 200-2 as a representative of the remote UE 100-1a and the remote UE 100-1b.

### (4) Reconnection Destination Selecting Operation in RRC Reestablishment Processing of Remote UE

Next, a reconnection destination (reestablishment destination) selecting operation in the RRC reestablishment processing of the remote UE 100-1 will be described.

Typically, once the UE 100 starts the RRC reestablishment processing, the UE 100 selects a reconnection destination cell by a cell selecting operation and transmits an RRC reestablishment request message to the selected cell. However, because it is desirable that the context information of the remote UE 100-1 stored in the gNB 200-1 can be used in the case in which the remote UE 100-1 starts the RRC reestablishment processing, it is assumed that the relay UE 100-2 to which the remote UE 100-1 has been connected most recently is selected as the reconnection destination.

In other words, this reconnection destination selecting operation includes a step in which the remote UE 100-1 selects a reconnection destination in accordance with a priority order in which the relay UE 100-2 has the highest priority order in a case in which RRC connection (PC5 RRC connection) between the remote UE 100-1 and the relay UE 100-2 has been released and a step in which the remote UE 100-1 attempts processing for reconnection to the selected reconnection destination. Here, the release of the PC5 RRC connection means that the PC5 RRC connection has been unintentionally released due to occurrence of a communication failure.

Such an operation may be performed only at the time of release of the PC5 RRC connection when the remote UE 100-1 includes RRC connection to the gNB 200-1. In a case in which the remote UE 100-1 does not include RRC connection to the gNB 200-1, this is because the context information of the remote UE 100-1 is not stored in the gNB 200-1.

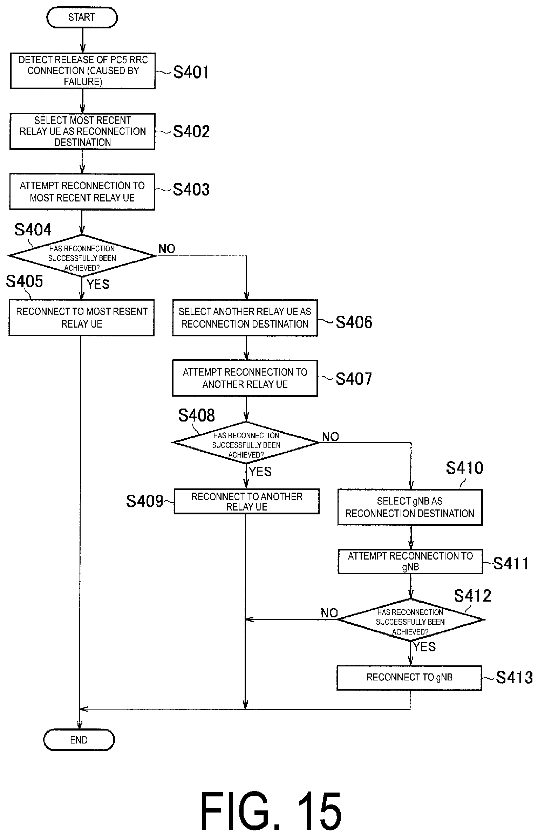

FIG. 15 is a diagram illustrating an example of the reconnection destination selecting operation in the RRC reestablishment processing of the remote UE 100-1.

As illustrated in FIG. 15, the remote UE 100-1 attempts reconnection to the relay UE 100-2 to which the remote UE 100-1 had been originally connected (Steps S402 and S403) in a case in which the PC5 RRC connection is disconnected unexpectedly (with no request from the upper layer) (Step S401). In a case in which the reconnection has been successfully performed (Step S404: YES), the remote UE 100-1 reestablishes PC5 RRC connection with the relay UE 100-2 (Step S405). Here, the PC5 RRC connection may be reestablished with a PC5 RRC message (for example, an RRC Reconfiguration Sidelink message) transmitted by the remote UE 100-1 or the relay UE 100-2.

In a case in which the reconnection has failed (Step S404: NO), the remote UE 100-1 selects another relay UE as a reconnection destination (Step S406) and attempts reconnection to another relay UE (Step S407). Because the remote UE 100-1 is assumed to have a poor reception status from the cell originally, the remote UE 100-1 places higher priority on another relay UE than on the gNB. Note that the case in which the reconnection has failed means a case in which connection is not recovered even after the remote UE 100-1 attempts, N times (N ≥ 1), the reconnection to the relay UE 100-2 to which the remote UE 100-1 has originally been connected. For example, a case in which connection is not recovered even after N transmission opportunities (irrespective of whether actual transmission has been performed) or after an RRC Reconfiguration Sidelink message is transmitted N times corresponds thereto. Here, the transmission of the RRC Reconfiguration Sidelink message may be limited. For example, a next RRC Reconfiguration Sidelink message may not be able to be transmitted unless a specific period of time (Prohibit timer) elapses from previous transmission of the RRC Reconfiguration Sidelink message.

In a case in which reconnection to another relay UE has been successfully achieved (Step S408: YES), the remote UE 100-1 establishes PC5 RRC connection with another relay UE (Step S409). A method for determining such a success and a failure is similar to that in Step S404. In Step S409, the remote UE 100-1 may transmit an RRC reestablishment request message to the gNB via another relay UE concerned. The gNB can thus acquire the context information of the remote UE 100-1.

In a case in which the reconnection to another relay UE has failed (Step S408: NO), the remote UE 100-1 selects the gNB as a reconnection destination (Step S410) and attempts reconnection to the gNB (Step S411). In a case in which the reconnection to the gNB has been successfully achieved (Step S412: YES), RRC connection with the gNB is established (Step S413). In Step S413, the remote UE 100-1 transmits an RRC reestablishment request message directly to the gNB.

Note that although this flowchart assumes that a state of reception from the cell is originally poor in the remote UE 100-1, the gNB may be selected with a higher priority than another relay UE in a case in which the state of reception from the cell is not poor.

### Other Embodiments

Although operations of the relay UE 100-2 have mainly been described in the aforementioned embodiment, the operations according to the aforementioned embodiment may be applied to an Integrated Access and Backhaul (IAB) node that is a radio relay node. Specifically, the IAB node may perform the operations of the relay UE 100-2 described in the aforementioned embodiment. In such an embodiment, the "relay UE" in the aforementioned embodiment is read as the "IAB node" instead and the "sidelink" in the aforementioned embodiment is read as an "access link" instead. Also, the PC5 RRC connection is read as RRC connection with the IAB node or RRC connection with an IAB donor instead.

A program causing a computer to execute each of the processing operations performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM, a DVD-ROM, or the like.

In addition, circuits for executing the processing operations to be performed by the UE 100 or the gNB 200 may be integrated, and at least part of the UE 100 or the gNB 200 may be configured as a semiconductor integrated circuit (a chipset or an SoC).

Embodiments have been described above in detail with reference to the drawings, but specific configurations are not limited to those described above, and various modifications can be made without departing from the scope of the present invention as defined by the claims.

## Claims

1. A communication control method using a relay user equipment (100-2) configured to relay communication between a remote user equipment (100-1) and a base station (200), the method comprising:
starting, by the remote user equipment (100-1) which is in a state in which Radio Resource Control, RRC, connection with the base station (200) has been established via the relay user equipment (100-2), RRC reestablishment procedure to a target base station (200) in response to detection of occurrence of a communication failure; and
transmitting, by the remote user equipment (100-1), an RRC reestablishment request message to the target base station (200) in the RRC reestablishment procedure, the RRC reestablishment request message transmitted not via the relay user equipment (100-2),
receiving, by the remote user equipment (100-1), an RRC reestablishment message from the target base station (200) in the RRC reestablishment procedure, the RRC reestablishment message received not via the relay user equipment (100-2),
transmitting, by the remote user equipment (100-1), an RRC reestablishment complete message to the target base station (200) in the RRC reestablishment procedure, the RRC reestablishment complete message transmitted not via the relay user equipment (100-2),
wherein the RRC reestablishment request message comprises a predetermined identifier configured to identify context information of the remote user equipment (100-1) stored in the base station (200).

2. The communication control method according to claim 1, further comprising
acquiring, by the remote user equipment (100-1), a cell identifier of the base station (200) via the relay user equipment (100-2) prior to a start of the RRC reestablishment processing,
wherein the RRC reestablishment request message comprises the cell identifier as the predetermined identifier.

3. A chipset provided in a remote user equipment (100-1) configured to perform communication between a base station (200) via a relay user equipment (100-2), the chip set comprising a processor and a memory, the processor configured to:
start Radio Resource Control, RRC, reestablishment procedure to a target base station (200) in response to detection of occurrence of a communication failure when the remote user equipment (100-1) is in a state in which RRC connection with the base station (200) has been established via the relay user equipment (100-2); and
transmit an RRC reestablishment request message to the target base station (200) in the RRC reestablishment procedure, the RRC reestablishment request message transmitted not via the relay user equipment (100-2),
receiving, by the remote user equipment (100-1), an RRC reestablishment message from the target base station (200) in the RRC reestablishment procedure, the RRC reestablishment message received not via the relay user equipment (100-2),
transmitting, by the remote user equipment (100-1), an RRC reestablishment complete message to the target base station (200) in the RRC reestablishment procedure, the RRC reestablishment complete message transmitted not via the relay user equipment (100-2),
wherein the RRC reestablishment request message comprises a predetermined identifier configured to identify context information of the remote user equipment (100-1) stored in the base station (200).

4. A remote user equipment (100-1) comprising a chipset according to claim 3.

5. A computer program comprising instructions that, when the program is executed by a remote user equipment (100-1) configured to perform communication between a base station (200) via a relay user equipment (100-2), cause the remote user equipment (100-1) to carry out the method of claim 1.

6. A system comprising a remote user equipment (100-1) according to claim 4.

## Patentansprüche

1. Kommunikationssteuerverfahren unter Verwendung einer Relais-Benutzereinrichtung (100-2), die konfiguriert ist, um eine Kommunikation zwischen einer Fern-Benutzereinrichtung (100-1) und einer Basisstation (200) weiterzuleiten, wobei das Verfahren aufweist:
Starten, durch die Fern-Benutzereinrichtung (100-1), die sich in einem Zustand befindet, in dem eine Funkressourcensteuerung-, RRC, -Verbindung mit der Basisstation (200) über die Relais-Benutzereinrichtung (100-2) hergestellt wurde, eines RRC-Wiederherstellungsvorgangs zu einer Zielbasisstation (200) als Reaktion auf ein Detektieren eines Auftretens eines Kommunikationsfehlers, und
Senden, durch die Fern-Benutzereinrichtung (100-1), einer RRC-Wiederherstellungsanforderungsnachricht an die Zielbasisstation (200) in dem RRC-Wiederherstellungsvorgang, wobei die RRC-Wiederherstellungsanforderungsnachricht nicht über die Relais-Benutzereinrichtung (100-2) gesendet wird,
Empfangen, durch die Fern-Benutzereinrichtung (100-1), einer RRC-Wiederherstellungsnachricht von der Zielbasisstation (200) in dem RRC-Wiederherstellungsvorgang, wobei die RRC-Wiederherstellungsnachricht nicht über die Relais-Benutzereinrichtung (100-2) empfangen wird,
Senden, durch die Fern-Benutzereinrichtung (100-1), einer RRC-Wiederherstellung-Abgeschlossen-Nachricht an die Zielbasisstation (200) in dem RRC-Wiederherstellungsvorgang, wobei die RRC-Wiederherstellung-Abgeschlossen-Nachricht nicht über die Relais-Benutzereinrichtung (100-2) gesendet wird,
wobei die RRC-Wiederherstellungsanforderungsnachricht eine vorbestimmte Kennung aufweist, die konfiguriert ist, um Kontextinformationen der Fern-Benutzereinrichtung (100-1) zu identifizieren, die in der Basisstation (200) gespeichert sind.

2. Kommunikationssteuerverfahren gemäß Anspruch 1, ferner aufweisend:
Erlangen, durch die Fern-Benutzereinrichtung (100-1), einer Zellenkennung der Basisstation (200) über die Relais-Benutzereinrichtung (100-2) vor einem Start der RRC-Wiederherstellungsverarbeitung,
wobei die RRC-Wiederherstellungsanforderungsnachricht die Zellenkennung als die vorbestimmte Kennung aufweist.

3. Chipsatz, der in einer Fern-Benutzereinrichtung (100-1) vorgesehen ist, die konfiguriert ist, um eine Kommunikation zwischen einer Basisstation (200) über eine Relais-Benutzereinrichtung (100-2) durchzuführen, wobei der Chipsatz einen Prozessor und einen Speicher aufweist, wobei der Prozessor konfiguriert ist zum:
Starten eines Funkressourcensteuerung-, RRC, - Wiederherstellungsvorgangs an eine Zielbasisstation (200) als Reaktion auf ein Detektieren eines Auftretens eines Kommunikationsfehlers, wenn sich die Fern-Benutzereinrichtung (100-1) in einem Zustand befindet, in dem eine RRC-Verbindung mit der Basisstation (200) über die Relais-Benutzereinrichtung (100-2) hergestellt wurde, und
Senden einer RRC-Wiederherstellungsanforderungsnachricht an die Zielbasisstation (200) in dem RRC-Wiederherstellungsvorgang, wobei die RRC-Wiederherstellungsanforderungsnachricht nicht über die Relais-Benutzereinrichtung (100-2) gesendet wird,
Empfangen, durch die Fern-Benutzereinrichtung (100-1), einer RRC-Wiederherstellungsnachricht von der Zielbasisstation (200) in dem RRC-Wiederherstellungsvorgang, wobei die RRC-Wiederherstellungsnachricht nicht über die Relais-Benutzereinrichtung (100-2) empfangen wird,
Senden, durch die Fern-Benutzereinrichtung (100-1), einer RRC-Wiederherstellung-Abgeschlossen-Nachricht an die Zielbasisstation (200) in dem RRC-Wiederherstellungsvorgang, wobei die RRC-Wiederherstellung-Abgeschlossen-Nachricht nicht über die Relais-Benutzereinrichtung (100-2) gesendet wird,
wobei die RRC-Wiederherstellungsanforderungsnachricht eine vorbestimmte Kennung aufweist, die konfiguriert ist, um in der Basisstation (200) gespeicherte Kontextinformationen der Fern-Benutzereinrichtung (100-1) zu identifizieren.

4. Fern-Benutzereinrichtung (100-1), aufweisend einen Chipsatz gemäß Anspruch 3.

5. Computerprogramm, das Anweisungen aufweist, die, wenn das Programm von einer Fern-Benutzereinrichtung (100-1) ausgeführt wird, die konfiguriert ist, um eine Kommunikation zwischen einer Basisstation (200) über eine Relais-Benutzereinrichtung (100-2) durchzuführen, die Fern-Benutzereinrichtung (100-1) veranlassen, das Verfahren gemäß Anspruch 1 durchzuführen.

6. System, aufweisend eine Fern-Benutzereinrichtung (100-1) gemäß Anspruch 4.

## Revendications

1. Procédé de commande de communication utilisant un équipement utilisateur relais (100-2) configuré pour relayer une communication entre un équipement utilisateur distant (100-1) et une station de base (200), le procédé comprenant :
le démarrage, par l'équipement utilisateur distant (100-1) qui se trouve dans un état dans lequel une connexion de contrôle de ressource radio, RRC, avec la station de base (200) a été établie via l'équipement utilisateur relais (100-2), d'une procédure de rétablissement RRC vers une station de base cible (200) en réponse à une détection d'une défaillance de communication ; et
la transmission, par l'équipement utilisateur distant (100-1), d'un message de demande de rétablissement RRC à la station de base cible (200) dans la procédure de rétablissement RRC, le message de demande de rétablissement RRC n'étant pas transmis via l'équipement utilisateur relais (100-2),
la réception, par l'équipement utilisateur distant (100-1), d'un message de rétablissement RRC provenant de la station de base cible (200) dans la procédure de rétablissement RRC, le message de rétablissement RRC n'étant pas reçu via l'équipement utilisateur relais (100-2) ;
la transmission, par l'équipement utilisateur distant (100-1), d'un message de rétablissement RRC terminé à la station de base cible (200) dans la procédure de rétablissement RRC, le message de rétablissement RRC terminé n'étant pas transmis via l'équipement utilisateur relais (100-2),
dans lequel le message de demande de rétablissement RRC comprend un identifiant prédéterminé configuré pour identifier des informations de contexte de l'équipement utilisateur distant (100-1) stockées dans la station de base (200).

2. Procédé de commande de communication selon la revendication 1, comprenant en outre :
l'acquisition, par l'équipement utilisateur distant (100-1), d'un identifiant de cellule de la station de base (200) via l'équipement utilisateur relais (100-2) avant un début du traitement de rétablissement RRC,
dans lequel le message de demande de rétablissement RRC comprend l'identifiant de cellule en tant qu'identifiant prédéterminé.

3. Chipset fourni dans un équipement utilisateur distant (100-1) configuré pour effectuer une communication entre une station de base (200) via un équipement utilisateur relais (100-2), le chipset comprenant un processeur et une mémoire, le processeur étant configuré pour :
lancer une procédure de rétablissement de contrôle de ressource radio, RRC, vers une station de base cible (200) en réponse à une détection d'une défaillance de communication lorsque l'équipement utilisateur distant (100-1) se trouve dans un état dans lequel une connexion RRC avec la station de base (200) a été établie via l'équipement utilisateur relais (100-2) ; et
transmettre un message de demande de rétablissement RRC à la station de base cible (200) dans la procédure de rétablissement RRC, le message de demande de rétablissement RRC n'étant pas transmis via l'équipement utilisateur relais (100-2),
recevoir, par l'équipement utilisateur distant (100-1), un message de rétablissement RRC provenant de la station de base cible (200) dans la procédure de rétablissement RRC, le message de rétablissement RRC n'étant pas reçu via l'équipement utilisateur relais (100-2),
transmettre, par l'équipement utilisateur distant (100-1), un message de rétablissement RRC terminé à la station de base cible (200) dans la procédure de rétablissement RRC, le message de rétablissement RRC complet n'étant pas transmis via l'équipement utilisateur relais (100-2),
dans lequel le message de demande de rétablissement RRC comprend un identifiant prédéterminé configuré pour identifier des informations de contexte de l'équipement utilisateur distant (100-1) stockées dans la station de base (200).

4. Un équipement utilisateur distant (100-1) comprenant un chipset selon la revendication 3.

5. Programme informatique comprenant des instructions qui, lorsque le programme est exécuté par un équipement utilisateur distant (100-1) configuré pour effectuer une communication entre une station de base (200) via un équipement utilisateur relais (100-2), amènent l'équipement utilisateur distant (100-1) à exécuter le procédé selon la revendication 1.

6. Système comprenant un équipement utilisateur distant (100-1) selon la revendication 4.
